Europäisches Patentamt

(19) European Patent Office   (11) Publication number: **0 020 206**

Office européen des brevets   **B1**

(12)   **EUROPEAN PATENT SPECIFICATION**

(45) Date of publication of patent specification: **02.03.83**   (51) Int. Cl.³: **B 60 T 11/16, B 60 T 11/20**

(21) Application number: **80400612.0**

(22) Date of filing: **06.05.80**

(54) Fast-fill master cylinder.

(30) Priority: **25.05.79 US 42699**

(43) Date of publication of application:
**10.12.80 Bulletin 80/25**

(45) Publication of the grant of the patent:
**02.03.83 Bulletin 83/9**

(84) Designated Contracting States:
**DE FR GB IT**

(56) References cited:
**FR - A - 2 312 399**
**FR - A - 2 372 059**
**FR - A - 2 383 807**
**FR - A - 2 387 827**
**FR - A - 2 395 868**
**US - A - 4 170 386**

(73) Proprietor: **THE BENDIX CORPORATION**
**Executive Offices Bendix Center**
**Southfield Michigan 48037 (US)**

(72) Inventor: **Gaiser, Robert Frank**
**5843 Ponderosa Drive**
**Stevensville Michigan 49127 (US)**

(74) Representative: **Huchet, André et al,**
**Service Brevets Bendix 44, rue François 1er**
**F-75008 Paris (FR)**

Courier Press, Leamington Spa, England.

Fast-fill master cylinder

The present invention relates to a fast-fill master cylinder, particularly for use in braking systems for automotive vehicles.

A fast-fill or quick take-up master cylinder permits larger brake lining clearances with a rotatable member so that lining drag is substantially eliminated. Such a master cylinder, as disclosed for instance in USA Patent No. 4 170 386 published on October 9, 1979, usually comprises a housing with a stepped bore and a primary piston sealingly engaging the stepped bore at a small diameter section and a large diameter section to substantially define a quick take-up chamber. When the piston is moved during a braking application, fluid within the quick take-up chamber is pressurized in response to contraction of the quick take-up chamber and communicated via a suitable passage to a primary chamber.

During the manufacture of the quick take-up master cylinder it is critical to maintain the concentricity between the small diameter section and the large diameter section of the stepped bore. The primary piston sealingly engages both sections and is movably disposed within both sections so that any eccentricity between the sections will cause the primary piston to wedge within the stepped diameter bore.

The present invention has for its object to overcome this drawback of the known constructions by providing a fast-fill or quick take-up master cylinder having a bore of substantially uniform diameter while still performing its intended function as satisfactorily as they do.

This object is achieved, according to the teaching of this invention, and starting from a fast-fill master cylinder of the kind comprising a housing defining a fluid reservoir and a bore for movably receiving at least one piston which cooperates therewith to define a primary chamber and an auxiliary chamber both communicating with said reservoir in a rest or brake release position of said one piston, said one piston being movable within said bore to develop fluid pressure within said primary and auxiliary chambers during a braking application and carrying valve means responsive to the fluid pressure built up within said chambers to control fluid communication between the auxiliary chamber and either the primary chamber or the reservoir, said auxiliary chamber being defined between a recessed portion of said piston, the inner wall of the bore and a resilient sealing member held in a fixed axial position with respect to said bore and designed so as to permit fluid communication between the auxiliary chamber and the reservoir when the piston is in its rest position and to block said communication upon initial movement of the piston from this position, thanks to the fact that said resilient sealing member is held in a recessed portion of the housing bore formed between two bore sections of substantially same diameter, and divides the volume between the recessed portion of the piston and the housing bore into two variable volume chambers, namely the proper auxiliary chamber and a further chamber which is permanently communicated with the reservoir.

In a preferred embodiment of the invention, the recessed portion of the housing bore consists of an annular groove of substantially rectangular cross section the bottom wall of which communicates with the reservoir, and the resilient sealing member is substantially X-shaped in cross-section and includes a first pair of opposite lips engaging the lateral faces of said annular groove and a second pair of opposite lips engaging the bottom wall of the recessed portion of the piston. Furthermore, the lips of the first pair are each provided with circumferentially spaced tabs which define apertures for fluid communication between the reservoir and said further and auxiliary chambers respectively. The sealing member thus cooperates with the piston and housing to open communication between the reservoir and auxiliary chamber in the rest or brake release position. The reservoir and auxiliary chamber remain open during initial movement of the piston relative to the sealing member so as to bleed the auxiliary chamber to the reservoir. Further movement of the piston relative to the sealing member closes communication between the auxiliary chamber and the reservoir and communicates fluid from the auxiliary chamber to the primary chamber. When a predetermined pressure level is reached within the primary chamber, the auxiliary chamber is either vented or metered to the reservoir. Upon termination of braking, the piston retracts to its rest position and the sealing member provides for communication of fluid from the reservoir to the auxiliary chamber to replenish the latter.

These and other features of the invention will become more readily apparent from reading the following description of some preferred embodiments, given by way of examples only, and with reference to the accompanying drawings in which:

— Figure 1 is a schematic illustration of a braking system having a master cylinder shown in cross-section which is constructed in accordance with the present invention;

— Figure 2 is an enlarged view of the encircled portion of Figure 1;

— Figure 3 is an enlarged view similar to Figure 2 showing a first alternative embodiment; and

— Figure 4 is an enlarged view similar to Figure 2 showing a second alternative embodiment.

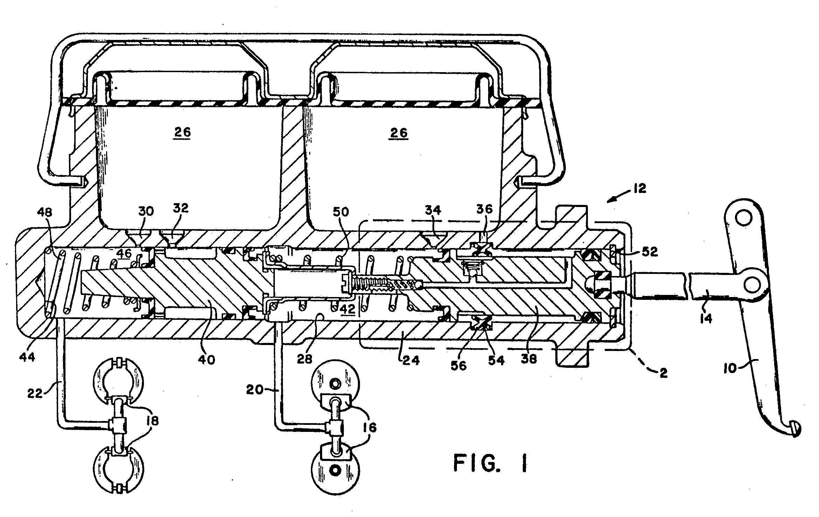

In the brake system of Figure 1, a brake pedal 10 is coupled to a master cylinder 12 via an input rod 14 and the master cylinder 12 communicates with brake assemblies 16 and 18 via conduits 20 and 22, respectively. When the pedal 10 is actuated by a vehicle operator the input rod is moved into the master cylinder to generate fluid pressure in a manner hereinafter described so that the generated fluid pressure is communicated via conduits 20 and 22 to their respective brake assemblies, thereby effecting a brake application.

The master cylinder 12 includes a housing 24 defining a split reservoir at 26. The reservoir communicates with a bore 28 via ports or openings 30, 32, 34 and 36. The bore 28 movably receives a primary piston 38 coupled to the input rod 14 and a secondary piston 40. The primary piston 38 cooperates with the secondary piston 40 to substantially define a primary chamber 42 therebetween and the secondary piston cooperates with the end wall 44 of bore 28 to substantially define a secondary chamber 46. The primary chamber 42 communicates with conduit 20 and the secondary chamber 46 communicates with conduit 22. A first spring 48 biases the secondary piston 40 away from end wall 44 and a second spring 50 biases the primary piston 38 away from secondary piston 40 against a snap ring 52 to define a rest position for the primary piston 38.

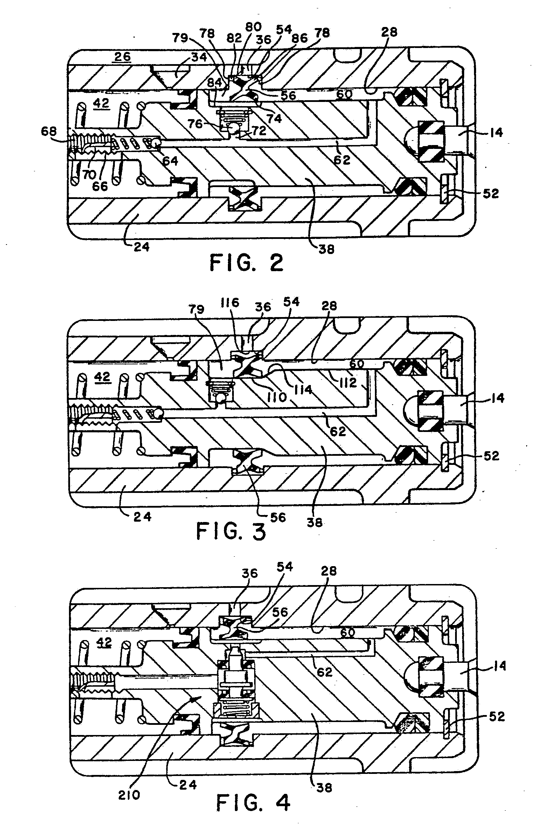

In accordance with the invention the bore 28 is substantially uniform in diameter except for a recess 54 which receives a sealing member 56. Turning to Figure 2, the piston 38 cooperates with sealing member 56 and the bore 28 to substantially define an auxiliary chamber 60. The portion of the bore 28 surrounding auxiliary chamber 60 has the same diameter as its remaining portion. A first passage 62 within the piston 38 includes a first check valve 64 adjacent a threaded bore 66 which receives a stem 68. The stem is cut out at 70 to enable the first passage 62 to communicate with the primary chamber 42. A second passage 72 intersects the first passage 62 and opens to the bore 28 on the side of sealing member 56 opposite auxiliary chamber 60. The second passage 72 could also open to the bore at the sealing member 56 provided the passage 72 terminates at a location to the left of the inner right lip 74 of sealing member 56. A second check valve 76 is disposed within passage 72 and its associated spring is stronger than the associated spring of check valve 64 so that check valve 64 will always open before check valve 76, if both check valves are exposed to the same pressure.

The sealing member 56 is substantially X-shaped with a plurality of tabs 78 projecting from the radially outer lips 80 and 86. The plurality of tabs 78 on lip 80 abut the wall of recess 54 to form an aperture 82 communicating the bore 28 with the reservoir 26 via opening 36. The plurality of tabs 78 on lip 86 permit fluid communication from a chamber 79 to auxiliary chamber 60 when braking is terminated and the piston is returning toward snap ring 52; however, during movement of the piston toward the left, the pressure developed within chamber 60 causes the lip 86 to deform itself resiliently and tightly engage the top wall of recess 54, thus blocking fluid communication from chamber 60 to opening 36. In addition, the piston 38 is recessed at 84 to open communication between the auxiliary chamber 60 and the reservoir via recess 84, aperture 82 and opening 36, when the piston is abutting snap ring 52. As the axial length of the recesses 84 is only slightly larger than the axial length of sealing member 56, movement of the piston 38 toward the primary chamber 42 will close the recesses 84 from the auxiliary chamber after a slight amount of piston movement.

The above described device operates as follows:

When the brake pedal 10 is actuated, the input rod 14 and piston 38 are moved to the left, viewing Figure 2, to contract the volume of fluid within auxiliary chamber 60. Initial movement of the piston to the left relative to the sealing member 56 causes fluid within the auxiliary chamber to flow to reservoir 26 via recesses 84, chamber 79, aperture 82 and opening 36. Consequently, a small portion of the fluid in auxiliary chamber 60 may be bled to the reservoir or to the chamber 79 upon initial movement of the piston 38. Further movement of the piston closes the recesses 84 at lip 74 to increase fluid pressure within auxiliary chamber 60 as well as in primary chamber 42. The increased pressure within auxiliary chamber 60 is communicated via passage 62 to check valve 64 to offset the pressure acting against the check valve from primary chamber 42 plus the associated spring of check valve 64 so as to open check valve 64. Thereafter, increasing fluid pressure within auxiliary chamber 60 is communicated to the primary chamber 42 until a predetermined pressure level is reached in the primary chamber or passage 62. When the predetermined pressure level is reached, check valve 76 is opened to vent the auxiliary chamber to the reservoir via aperture 82 and opening 36.

The increased fluid pressure communicated to the primary chamber cooperates with the contraction of spring 50 to move secondary piston 40 so as to pressurize fluid within secondary chamber 46. Consequently, fluid pressure within the primary and secondary chambers is communicated via conduits 20 and 22 to respective brake assemblies 16 and 18 to effectuate braking.

Upon termination of braking, the springs 48 and 50 bias the pistons 40 and 38 to return to their rest positions. Primary piston 38 moves relative to the sealing member 56 so as to expand the auxiliary chamber 60 to decrease the pressure therein and to contract chamber 79. As a result fluid from the reservoir 26 and from the chamber 79 flows past right outer lip 86 to replenish fluid within auxiliary chamber 60. Fluid from chamber 79 passes aperture 82 and opening 36 to communicate with reservoir 26 or auxiliary chamber 60 via lip 86. When the primary piston returns to abut snap ring 52, the auxiliary chamber is opened to the reservoir via recesses 84 and aperture 82.

In a first alternate embodiment shown in Figure 3, the primary piston 38 includes a first diameter portion 110 and a second diameter portion 112 larger in diameter than the first diameter portion 110. The portions are separated by a ramp 114 and the sealing member 56 is engageable with the first diameter portion when the piston 38 is in the rest position. A clearance is established between the bottom wall 116 of recess 54 and the sealing member 56 when the latter is engageable with the first diameter portion to open communication between the reservoir 26 and the auxiliary chamber 60. When the piston 38 is moved to the left during a braking application, the ramp 114 causes the sealing member to expand to engage the bottom wall 116. During expansion of the resilient member, a small amount of fluid within auxiliary chamber 60 is bled to reservoir. When the sealing member is expanded by the ramp 114 to movably engage the second diameter portion 112, the sealing member engages the bottom wall 116 to seal the auxiliary chamber from the reservoir 26. Consequently, increasing pressurized fluid wihtin auxiliary chamber 60 is communicated to the primary chamber 42 via passage 62 in the same manner as described above.

In a second alternate embodiment shown in Figure 4, a metering valve assembly 210 is disposed between the auxiliary chamber 60 and the primary chamber 42. The metering valve is responsive to fluid pressure within the primary chamber to maintain the auxiliary chamber open to the reservoir 26 when the pressure level in the primary chamber is above a predetermined value.

In addition, the metering valve gradually relieves the fluid pressure within the auxiliary chamber to communicate the same to the reservoir, rather than dumping the auxiliary chamber to the reservoir at the predetermined pressure level. This metering valve operates as follows: As the fluid pressure within chamber 42 increases, the metering valve 210 is movable downward to open passage 62 to the recess 54, whereupon fluid pressure is reduced within auxiliary chamber 60. This reduction in fluid pressure at chamber 60 and across the top end of metering valve 210 permits the latter to shuttle upward to close passage 62 to recess 54 thereby slightly building pressure within passage 62 and chamber 60 to again bias the metering valve downward to open passage 62 to recess 54. Consequently, the fluid pressure within chamber 60 is gradually reduced until the fluid pressure within chamber 42 is sufficient to bias the metering valve to an open position against its spring. Thereafter, the chamber 60 is maintained in communication with the reservoir via passage 62 and recess 54 so long as the fluid pressure within the chamber 42 is above a predetermined level.

With respect to all of the embodiments, the bore 28 is substantially uniform in diameter between the primary chamber and the auxiliary chamber and the sealing member 56 is fixed axially within the recess 54. Consequently, the primary piston is movable relative to the sealing member to communicate fluid pressure within the auxiliary chamber to the primary chamber.

## Claims

1. A fast-fill master cylinder (12) comprising a housing (24) defining a fluid reservoir (26) and a bore (28) for movably receiving at least one piston (38) which cooperates therewith to define a primary chamber (42) and an auxiliary chamber (60) both communicating with said reservoir (26) in a rest or brake release position of said one piston (38), said one piston (38) being movable within said bore (28) to develop fluid pressure within said primary (42) and auxiliary (60) chambers during a braking application and carrying valve means (64, 76) responsive to the fluid pressure built up within said chambers to control fluid communication between the auxiliary chamber (60) and either the primary chamber (42) or the reservoir (26) said auxiliary chamber (60) being defined between a recessed portion of said piston (38), the inner wall of the bore (28) and a resilient sealing member (56) held in a fixed axial position with respect to said bore (28) and designed so as to permit fluid communication between the auxiliary chamber (60) and the reservoir (26) when the piston (38) is in its rest position and to block said communication upon initial movement of the piston (38) from this position, characterized in that said resilient sealing member (56) is held in a recessed portion (54) of the housing bore (28) formed between two bore sections of substantially same diameter, and divides the volume between the recessed portion of the piston (38) and the housing bore (28) into two variable volume chambers, namely the proper auxiliary chamber (6) and a further chamber (79) which is permanently communicated with the reservoir (26).

2. A fast-fill master cylinder according to claim 1, characterized in that the recessed portion of the housing bore consists of an annular groove (54) of substantially rectangular cross-scection the bottom wall of which communicates with the reservoir (26), and in that the resilient sealing member (56) is substantially X-shaped in cross-section and includes a first pair of opposite lips (80, 86) engaging the lateral faces of said annular groove (54) and a second pair of opposite lips engaging the bottom wall of the recessed portion of the piston (38).

3. A fast-fill master cylinder according to

## 0 020 206

claim 2, characterized in that the lips (80, 86) of the first pair are each provided with circumferentially spaced tabs (78) which define apertures (82) for fluid communication between the reservoir (26) and said further (79) and auxiliary (60) chambers respectively.

4. A fast-fill master cylinder according to any of claims 1—3, characterized in that the bottom wall of the recessed portion of the piston (38) is stepped to define a first diameter section (110) and a second, larger diameter section (112), and in that said resilient sealing member (56) normally engages with its second pair of lips and first diameter section and is expandible to engage said second diameter section as the piston is moved during a braking application.

5. A fast-fill master cylinder according to claim 4, characterized in that the resilient sealing member (56) normally defines a radial clearance with the bottom wall (116) of the recessed portion (54) of the bore when engaging said first diameter section (110) of the piston (38), and is brought into engagement with said bottom wall (116) when engaging said second diameter section (112) of the piston.

## Revendications

1. Un maître-cylindre (12) à remplissage rapide comprenant un corps (24) délimitant un réservoir (26) à fluide et un alésage (28) pour recevoir de manière mobile au moins un premier piston (38) qui coopère avec lui pour délimiter une chambre primaire (42) et une chambre auxiliaire (60) qui communiquent toutes deux avec ledit réservoir (26) dans une position de repos ou de relâchement des freins dudit premier piston (38), ledit premier piston (38) étant mobile à l'intérieur dudit alésage (28) pour engendrer une pression de fluide à l'intérieur desdites chambres primaire (42) et auxiliaire (60) au cours d'un actionnement des freins et portant des moyens (64, 76) formant soupape fonctionnant en réponse à la pression de fluide qui s'élève à l'intérieur desdites chambres pour commander la communication fluidique entre la chambre auxiliaire (60) et soit la chambre primaire (42) soit le réservoir (26), ladite chambre auxiliaire (60) étant formée entre une partie évidée dudit piston (38), la paroi intérieure de l'alésage (28) et un organe d'étanchéité élastique (56) maintenu dans une position axiale fixe par rapport audit alésage (28) et conçu pour permettre la communication fluidique entre la chambre auxiliaire (60) et le réservoir (26) lorsque le piston (38) est dans sa position de repos et interrompre ladite communication à la suite du mouvement initial du piston (38) hors de cette position, caractérisé en ce que ledit organe d'étanchéité élastique (56) est maintenu dans une partie évidée (56) de l'alésage (28) du corps formée entre deux parties d'alésage ayant sensiblement le même diamètre, et divise le volume entre la partie évidée du piston (32) et l'alésage (38) du corps en deux chambres à volume variable, à savoir la chambre auxiliaire proprement dite (60) et une chambre supplémentaire (79) qui est en permanence en communication avec le réservoir (26).

2. Un maître-cylindre à remplissage rapide selon la revendication 1, caractérisé en ce que la partie évidée de l'alésage du corps est constituée par une rainure annulaire (54) ayant une section transversale sensiblement rectangulaire, dont la paroi de fond communique avec le réservoir (76) et en ce que l'organe d'étanchéité élastique (56) a une section transversale sensiblement en forme de X et comporte une première paire de lèvres opposées (80, 86) en appui contre les faces latérales de ladite rainure annulaire (54) et une seconde paire de lèvres opposées en appui contre la paroi de fond de la partie évidée du piston (38).

3. Un maître-cylindre à remplissage rapide selon la revendication 2, caractérisé en ce que chacune des lèvres (80, 86) de la première paire est munie de pattes (78) circonférentiellement espacées qui délimitent des passages (82) pour établer une communication fluidique entre le réservoir (26) et lesdites chambres supplémentaire (79) et, respectivement, auxiliaire (60).

4. Un maître-cylindre à remplissage rapide selon l'une quelconque des revendications 1 à 3, caractérisé en ce que la paroi de fond de la partie évidée du piston (38) est en gradin pour former une partie (110) ayant un premier diamètre et une partie (112) ayant un second diamètre plus grand, et en ce que ledit organe d'étanchéité élastique (56) a normalement sa seconde paire de lèvres en appui contre la partie ayant un premier diamètre et peut s'élargir pour venir en appui contre ladite partie ayant un second diamètre lorsque le piston est déplacé au cours d'un actionnement des freins.

5. Un maître-cylindre à remplissage rapide selon la revendication 4, caractérisé en ce que l'organe d'étanchéité élastique (56) forme normalement un espace libre radial avec la paroi de fond (116) de la partie évidée (54) de l'alésage lorsqu'il est en appui contre la partie (110) ayant un premier diamètre de piston (38) et il est amené en appui contre ladite paroi de fond (116) lorsqu'il est en appui contre ladite partie (112) ayant un second diamètre du piston.

## Patentansprüche

1. Schnellfüllender Hauptbremszylinder (12) mit einem Gehäuse (24), das ein Strömungsmittelreservoir (26) und eine Bohrung (28) zur beweglichen Aufnahme zumindest eines Kolbens (38) bildet, der mit der Bohrung zusammen eine Hauptkammer (42) une eine Hilfskammer (60) bildet, die beide mit dem Reservoir (26) in einer Ruhe- bzw. Bremslösestellung des einen Kolbens (38) in Verbindung stehen, wobei der eine Kolben (38) innerhalb der Bohrung (28) bewegbar ist, um während einer Bremsbetätigung einen Strömungsmitteldruck innerhalb der Hauptkammer (42) und der Hilfskammer (60) zu entwickeln, und der eine Ventileinrichtung (64, 76) trägt, die auf dem in den Kammern aufgebauten Strömungsmitteldruck anspricht, um die Strömungsverbindung zwischen der Hauptkammer (60) und entweder der Hilfskammer (42) oder dem Reservoir (26) zu steuern, wobei die Hilfskammer (60) gebildet ist zwischen einem ausgenommenen Abschnitt des Kolbens (38), der Innenwand der Bohrung (28) und einem elastischen Dichtglied (56), das in einer festgelegten axialen Stellung bezüglich der Bohrung (28) gehalten wird und so ausgelegt ist, daß es eine Strömungsverbindung zwischen der Hilfskammer (60) und dem Reservoir (26) zuläßt, wenn sich der Kolben (38) in seiner Ruhestellung befindet, und daß es diese Strömungsverbindung bei einer anfänglichen Bewegung des Kolbens (38) aus dieser Stellung heraus sperrt, dadurch gekennzeichnet, daß das elastische Dichtglied (56) in einem ausgenommenen Abschnitt (54) der Gehäusebohrung (28) gehalten wird, der zwischen zwei Bohrungsabschnitten von im wesentlichen gleichem Durchmesser gebildet ist, und das Volumen zwischen dem ausgenommenen Abschnitt des Kolbens (38) und der Gehäusebohrung (28) in zwei Kammern veränderlichen Volumens unterteilt, und zwar in die eigentliche Hilfskammer (60) und eine weitere Kammer (29), die mit dem Reservoir (26) dauernd verbunden ist.

2. Schnellfüllender Hauptbremszylinder nach Anspruch 1, dadurch gekennzeichnet, daß der ausgenommene Abschnitt der Gehäusebohrung aus einer Ringnut (54) von im wesentlichen rechteckigem Querschnitt besteht, deren Bodenwand mit dem Reservoir (26) in Verbindung steht, und daß das elastische Dichtglied (56) einen im wesentlichen X-förmigen Querschnitt besitzt und ein erstes Paar entgegengesetzter Lippen (80, 86) und ein zweites Paar entgegengesetzter Lippen aufweist, von denen das erste Paar an den Seitenflächen der Ringnut (54) anliegt und das zweite Paar an der Bodenwand des ausgenommenen Abschnittes des Kolbens (38) anliegt.

3. Schnellfüllender Hauptbremszylinder nach Anspruch 2, dadurch gekennzeichnet, daß die Lippen (80, 86) des ersten Paares jeweils mit in Umfangsrichtung beabstandeten Laschen (78) versehen sind, die Öffnungen (82) für eine Strömungsverbindung zwischen dem Reservoir (26) und der weiteren Kammer (79) bzw. der Hilfskammer (60) bilden.

4. Schnellfüllender Hauptbremszylinder nach einem der Ansprüche 1 bis 3, dadurch gekennzeichnet, daß die Bodenwand des ausgenommenen Abschnittes des Kolbens (38) abgestuft ist und somit einen Abschnitt (110) eines ersten Durchmessers und einen Abschnitt (112) eines zweiten größeren Durchmessers bildet, und daß das elastische Dichtglied (56) normalerweise mit seinem zweiten Paar Lippen an dem Abschnitt ersten Durchmessers anliegt und aufweitbar ist, um mit dem Abschnitt zweiten Durchmessers in Berührung zu treten, wenn der Kolben bei einer Bremsbetätigung bewegt wird.

5. Schnellfüllender Hauptbremszylinder nach Anspruch 4, dadurch gekennzeichnet, daß das elastische Glied (56) normalerweise einen radialen Spalt mit der Bodenwand (116) des ausgenommenen Abschnittes (54) der Bohrung definiert, wenn er an dem Abschnitt (110) ersten Durchmessers anliegt, und in Berührung mit der Bodenwand (116) gebracht wird, wenn er an dem Abschnitt (112) zweiten Durchmessers anliegt.

FIG. I

FIG. 2

FIG. 3

FIG. 4

2